## Europäisches Patentamt

## European Patent Office

## Office européen des brevets

(19)

(11) Veröffentlichungsnummer: **0 096 759**
**B1**

(12) **EUROPÄISCHE PATENTSCHRIFT**

(45) Veröffentlichungstag der Patentschrift:
**27.12.89**

(21) Anmeldenummer: **83104943.2**

(22) Anmeldetag: **19.05.83**

(51) Int. Cl.⁴: **B 01 J 33/00,** B 01 J 19/00,
C 02 F 1/70, C 22 B 3/00,
C 02 F 1/72

(54) Verfahren zur Reduktion oder Oxidation von reduzierbaren oder oxidierbaren Stoffen in wässriger Lösung.

(30) Priorität: **05.06.82 DE 3221306**

(43) Veröffentlichungstag der Anmeldung:
**28.12.83 Patentblatt 83/52**

(45) Bekanntmachung des Hinweises auf die Patenterteilung:
**27.12.89 Patentblatt 89/52**

(84) Benannte Vertragsstaaten:
**AT BE CH FR GB IT LI NL**

(56) Entgegenhaltungen:
**WO-A-81/01159
DE-A-2 151 572
DE-A-3 023 703
DE-B-1 162 433
FR-A-1 089 845
FR-A-2 195 478
US-A-3 392 059
US-A-3 957 506**

(73) Patentinhaber: **Kernforschungsanlage Jülich Gesellschaft mit beschränkter Haftung, Postfach 1913, D-5170 Jülich 1 (DE)**

(84) Benannte Vertragsstaaten: **CH FR GB IT LI NL**

(73) Patentinhaber: **Kastening, Bertel, Prof. Dr., Lofotenstrasse 21, D-2000 Hamburg 73 (DE)**

(84) Benannte Vertragsstaaten: **BE AT**

(72) Erfinder: **Divisek, Jiri, Dr., Gutenbergstrasse 34, D-5170 Jülich (DE)**
Erfinder: **Fürst, Leander, Heinsberger Strasse 10, D-5170 Jülich (DE)**
Erfinder: **Kastening, Bertel, Prof. Dr., Lofotenstrasse 21, D-2000 Hamburg 73 (DE)**
Erfinder: **Luft, Harald, In den Domänen 1, D-5162 Niederzier (DE)**

EP 0 096 759 B1

## Beschreibung

Die Erfindung bezieht sich auf ein Verfahren zur Reduktion oder Oxidation von reduzierbaren oder oxidierbaren Stoffen in einer wässrigen Lösung mit gasförmigen Reduktions- oder Oxidationsmitteln, die der Lösung durch eine einen elektrochemisch wirksamen Katalysator enthaltende feinporige Katalysatorschicht zugeführt werden.

Es ist bekannt, Schadstoffe in wässriger Lösung durch Oxidation oder Reduktion zu beseitigen oder Metalle aus solcher Lösung durch Reduktion der Metallionen zurückzugewinnen. Solche Verfahren dienen beispielsweise zur Reinigung von Abwässern, deren Schadstoffgehalt wegen der toxischen Wirkung der in ihnen enthaltenen Schadstoffe auf niedrige Werte zu begrenzen ist, oder zur Rückgewinnung wertvoller Metalle zwecks Wiederverwendung. Die Entgiftung zyanidhaltiger oder sulfithaltiger Lösungen mittels Sauerstoff an Aktivkohle Katalysator oder von als Katalysator eingesetztem Elektrodenmaterial aus Brennstoffzellen wird in den DE-Patentschriften 2 714 075 und 2 713 991 beschrieben. Eine katalytische Reduktion von Chromat mit Wasserstoffgas ist in der DE-Patentschrift 2 714 074 angegeben. Aus der DE-Patentschrift 2 717 368 ist ein Reduktionsverfahren zum Abscheiden von Metallen aus Metallionen enthaltenden wässrigen Lösungen durch Wasserstoffgas bekannt. Als Katalysatoren werden in den beiden zuletzt genannten Fällen Materialien eingesetzt, die für die elektrochemische Oxidation von Wasserstoff geeignet sind.

In der DE-A-3 023 703 wird eine den Katalysator enthaltende feinporige Katalysatorschicht auf einem Trägerkörper aus porösem Material beschrieben. Der Trägerkörper und die Katalysatorschicht sind gasdurchlässig, Oxidations- oder Reduktionsmittel treten gleichmäßig verteilt durch die Schicht in die Lösung ein. Die gleichmäßige Durchgasung der feinporigen Katalysatorschicht führt zu hoher Ausbeute auch bei Lösungen, die Schwebstoffe oder andere von der Lösung mitgeführte feine Verunreinigungen enthalten. Die Katalysatorschicht ist auf die der Lösung zugewandte Fläche des porösen Trägerkörpers aufgebracht. Als Trägerkörper dienen vorzugsweise Platten aus porösem Graphit oder Hohlkörper aus porösem Kohlenstoff.

Nachteilig ist bei Durchführung der Oxidations- oder Reduktionsverfahren mit vom Oxidations- oder Reduktionsmittel durchgaster Katalysatorschicht, daß der Umsatz besonders bei geringer Konzentration des umzusetzenden Stoffes in der Lösung nur mit geringer Geschwindigkeit erfolgt, weil diese vom Stofftransport aus der Lösung zur Katalysatorschicht bestimmt wird und somit der Konzentration des Stoffes in der Lösung proportional ist. Infolgedessen ist im allgemeinen etwa die gleiche Behandlungszeit erforderlich, um einen Stoff von seinem Ausgangsgehalt auf 10 % und von 10 % bis auf 1 % des Ausgangsgehaltes abzureichern. Aus diesen Gründen wird die vorhandene Kapazität der Katalysatorschicht selbst bei hohen Anfangskonzentrationen und während der ersten Behandlungsphase nicht voll ausgenutzt.

Aufgabe der Erfindung ist es, ein Verfahren zu schaffen, mit dem die Umsatzgeschwindigkeit des gelösten Stoffes vergrößert wird, ohne daß zugleich mehr Katalysator erforderlich wäre und ohne Vergrößerung des Behandlungsraumes.

Diese Aufgabe wird bei einem Verfahren der eingangs genannten Art gemäß der Erfindung durch die im Patentanspruch 1 angegebenen Maßnahmen gelöst. Dabei wird die Katalysatorschicht auf ihrer der Lösung zugewandten Seite mit Körpern aus elektrisch leitendem Material, die insgesamt eine große Oberfläche besitzen, in elektrisch leitende Verbindung gebracht. Die Körper sind zumindest im Bereich der Katalysatorschicht in der Lösung verteilt und vergrößern so die für den Umsatz des gelösten Stoffes wirksame Oberfläche.

Bisher war davon ausgegangen worden, daß der Umsatz des Reaktionsgases und der Umsatz des aus der Lösung zu entfernenden Stoffes am gleichen Ort erfolgen müssen, da beispielsweise bei der Reduktion eines Metallions mittels Wasserstoffs die die Elektronen liefernde Wasserstoffoxidation und die die Elektronen verzehrende Metallionenreduktion bei einem ohne äußere Stromquelle verlaufenden Prozeß nicht voneinander trennbar sind, obwohl die Reaktion mikroheterogenen Charakter aufweist, vgl. hierzu W. Faul und B. Kastening, Chemie-Ingenieur-Technik 50, 1978, S. 533ff. Es hat sich jedoch gezeigt, daß in die Lösungen eingesetzte Körper aus leitfähigem Material, die eine große von der Lösung umspülbare Oberfläche aufweisen und die mit der Katalysatorschicht in elektrisch leitender Verbindung stehen, auch dann für den Umsatz des gelösten Stoffes wirksam sind, wenn sie von dem Ort des Gasumsatzes am Katalysator mehrere Millimeter oder gar Zentimeter entfernt sind. Die maximale Erstreckung des Bereiches, in dem die Körper in der Lösung von der Katalysatorschicht ausgehend verteilt sind, wird durch die Ionenwanderung der Reaktionspartner in der Lösung mitbestimmt, wobei die Leitfähigkeit der zu behandelnden Lösung einerseits und andererseits der als treibende Spannung auftretende Redoxpotential-Unterschied zwischen dem System Gas/Reaktionsprodukt des Gases und dem System Schadstoff/Reaktionsprodukt des Schadstoffes (bzw. für letzteres bei der Abscheidung von Metall das System Metallion/Metall) den gewünschten Umsatz maßgebend beeinflussen.

Zweckmäßig ist es, die in die Lösung eingesetzten Körper aus elektrisch leitendem Material unter Zwischenschalten einer elektrisch leitenden Schutzabdeckung für die Katalysatorschicht mit dieser elektrisch leitend zu verbinden, um Beschädigungen der Katalysatorschicht durch die von der Lösung umspülten Körper zu vermeiden. Metallische Körper, die die Oberfläche für den Umsatz des gelösten Stoffes wirksam vergrößern, sind beispielsweise Metallspäne, Knäuel aus Metalldraht, Metallnetze, Metallwolle, Metallfilz und ähnliches. Auch Graphitfilz hat sich als elektrisch leitendes Material bewährt.

Die erfindungsgemäßen Maßnahmen führen zu einer beträchtlichen Steigerung der Umsatzgeschwindigkeit. Es bedarf somit für die Behandlung einer vorgegebenen, in bestimmter Zeiteinheit zu reinigenden Abwassermenge einer verhältnismäßig kleinen Vorrichtung, mit geringem Katalysatorbedarf, was insbesondere dann von Bedeutung ist, wenn als Katalysator Platin oder auch Palladium einzusetzen ist.

Ein weiterer wesentlicher Vorteil des Verfahrens ist gegeben, wenn aus der wässrigen Lösung Metalle abzuscheiden sind. Die Metallabscheidung findet nämlich auf den Oberflächen der von der Lösung umspülten Körper aus elektrisch leitendem Material statt. Das abgeschiedene Metall ist von den Körpern nach deren Entnahme aus der Lösung leicht abtrennbar. Zweckmäßig werden in die Lösung Körper eingesetzt, die aus dem gleichen Metall bestehen wie das aus der Lösung abzuscheidende Metall. So können zum Beispiel zur Abscheidung von Kupfer Kupferspäne verwendet werden, wie sie beim Bohren und Fräsen anfallen. Die Späne werden nach Rückgewinnung des Kupfers gemeinsam mit dem auf ihnen abgeschiedenen Kupfer einer Wiederverwendung zugeführt. Bevorzugt wird jedoch für die in die Lösung einzusetzenden Körper ein Material verwendet werden, von dem sich das abzuscheidende Metall besonders leicht trennen läßt. So wird insbesondere zur Abscheidung von Kupfer geknäuelter Edelstahldraht (V2A) verwendet, auf dem sich das Kupfer abscheidet, von dem es aber bei mechanischer Beeinflussung auch leicht abspringt, so daß sich das abgeschiedene Kupfer frei von metallischen Verunreinigungen gewinnen läßt.

Ausführungsbeispiele für das erfindungsgemäße Verfahren sind im folgenden angegeben:

## Ausführungsbeispiel 1

Auf einem quadratischen Kunststoffrahmen von etwa 100 mm Kantenlänge und einer Dicke von wenigen Millimetern wurde auf beiden Seiten des Rahmens je ein Metallnetz aus Edelstahldraht (V2A, Drahtstärke 0,12 mm, Maschenweite 0,2 mm) befestigt, so daß ein flacher Hohlkörper von etwa 8 mm Dicke mit einer wirksamen Außenfläche von etwa 200 cm² entstand. Die auf den Kunststoffrahmen befestigten Metallnetze waren vorher einseitig mit einer platinhaltigen Katalysatorschicht aus Aktivkohle, Polytetrafluorethylen und Bindemittel (z. B. Kautschuk) belegt worden und waren im Kunststoffrahmen so eingesetzt, daß jeweils die beschichtete Seite der Metallnetze eine Innenseite des Hohlkörpers bildete. Durch den Kunststoffrahmen wurde ein Rohr zur Zuführung von Reaktionsgas in den Innenraum des mit beschichteten Metallnetzen bespannten Kunststoffrahmens hindurchgeführt. Der Kunststoffrahmen wurde in eine Lösung getaucht, die anfangs Kupfersulfat in einer Konzentration von 1900 mg Cu pro Liter enthielt und ein Gesamtvolumen von 1400 ml aufwies. Beim Durchgasen der Katalysatorschicht mit Wasserstoff, der als Reaktionsgas in den Innenraum des Kunststoffrahmens eingeleitet wurde, war die Kupferkonzentration in der Lösung nach 45 Minuten auf 140 mg Cu pro Liter gesunken.

Der gleiche mit beschichteten Metallnetzen bespannte Kunststoffrahmen wurde in einem zweiten Versuch mit einer Schüttung von Kupferspänen, die in der Lösung verteilt waren, in elektrisch leitenden Kontakt gebracht. Die Kupferspäne, die beim Fräsen angefallen waren, wiesen eine Dicke von 0,2 mm, eine Breite von 2 - 3 mm und verschiedene Längen auf. Die Gesamtmenge der Späne betrug 200 g, ihre gesamte Oberfläche war etwa 3600 cm² groß. Bei Durchgasung der Katalysatorschicht mit Wasserstoff in gleicher Weise wie oben beschrieben, wurde zugleich die Lösung innerhalb der Kupferspäne-Schüttung in Bewegung gebracht. Durch Reduktion wurden dabei 1400 ml Kupfersulfatlösung mit einem Anfangsgehalt von 1900 mg Cu pro Liter innerhalb 45 Minuten bis auf 3 mg Cu pro Liter abgereichert.

## Ausführungsbeispiel 2

Mit einem im Ausführungsbeispiel 1 angegebenen Kunststoffrahmen mit Metallnetzen, die mit einer Katalysatorschicht beschichtet waren, wurde zunächst ohne Verwendung zusätzlicher Körper in der Lösung Kupfer aus 700 ml einer anfangs 1850 mg Cu pro Liter enthaltenden wässrigen Lösung abgeschieden. Nach 50 Minuten war die Konzentration in der Lösung auf 100 mg Cu pro Liter gesunken. In einem zweiten Versuch wurden die beschichteten Metallnetze auf ihrer der Lösung zugewandten, unbeschichteten Seite mit Knäueln aus Edelstahldraht (V2A) von 0,5 mm Durchmesser und einer Gesamtoberfläche von etwa 500 cm² in Berührung gebracht. Beim Durchgasen der Katalysatorschicht mit Wasserstoff sank die Konzentration von anfangs ebenfalls 1850 mg innerhalb von 50 Minuten bis auf 1,3 mg Cu pro Liter. Das auf dem Edelstahldraht abgeschiedene Kupfer konnte von diesem anschließend leicht abgeklopft werden.

## Ausführungsbeispiel 3

Ein mit beschichteten Metallnetzen bespannter Kunststoffrahmen wie im Ausführungsbeispiel 1, jedoch mit einer wirksamen geometrischen Fläche von nur 8 cm² wurde in 90 ml einer Silbernitratlösung mit einem Gehalt von 530 mg Ag pro Liter eingetaucht. Der Lösung waren zur Verbesserung ihrer Leitfähigkeit 2,5 ml gesättigte Kaliumnitratlösung zugesetzt. Bei der Durchgasung mit Wasserstoff wurde eine Abreicherung des Silbergehaltes in der Lösung auf 0,6 mg pro Liter innerhalb von 70 Minuten erreicht. Wurde die Außenfläche mit feiner Silberwolle (Faden-

stärke 50 μm, berechnete von Lösung umspülte Oberfläche etwa 160 cm²) in elektrisch leitende Berührung gebracht und der vorstehende Versuch wiederholt, so wurde die Abrecherung von 530 mg auf 0,6 mg Ag pro Liter innerhalb von nur 9 Minuten erreicht.

**Ausführungsbeispiel 4**

Ein metallnetzbespannter Kunststoffrahmen wie im Ausführungsbeispiel 1 mit 98 cm² wirksamer Außenfläche wurde in 330 ml einer schwefelsauren Kaliumchromatlösung mit einem Anfangsgehalt von 950 mg Chrom in Form von $CrO_3$ pro Liter getaucht und mit Wasserstoff begast. Durch Reduktion des Chromats zu Chrom (III)-Salz hatte sich der Gehalt an sechswertigem Chrom nach 133 Minuten auf 3 mg $CrO_3$ pro Liter verringert. Der Versuch wurde wiederholt, wobei die Außenfläche des Metallnetzes mit unbeschichtetem, gefaltetem Edelstahlnetz von derselben Art wie im Kunststoffrahmen in elektrisch leitende Berührung gebracht wurde. Die gesamte Edelstahlnetzoberfläche des in die Lösung zusätzlich eingesetzten Edelstahlnetzes betrug etwa 600 cm². Damit wurde bei Durchgasung der Katalysatorschicht mit Wasserstoff eine Abreicherung von 950 mg auf 3 mg $CrO_3$ pro Liter Lösung innerhalb von 96 Minuten erreicht. Bei einer Edelstahldrahtoberfläche von etwa 1400 cm² konnte die gleiche Abreicherung innerhalb von nur 80 Minuten erzielt werden.

**Ausführungsbeispiel 5**

Ein mit Metalldrahtnetz bespannter Kunststoffrahmen wie in den vorgenannten Ausführungsbeispielen jedoch mit 7,3 cm² wirksamer Oberfläche wurde in 73 ml Kupfersulfat-Lösung eingesetzt. Von einem Anfangsgehalt von 1850 mg Cu pro Liter Lösung wurde bei Durchgasung mit Wasserstoff nach 50 Minuten eine Abreicherung bis auf 472 mg Cu pro Liter erreicht. Wurden in die Lösung zusätzlich 20 g einer Schüttung Graphitgranulat aus würfelförmigen Graphitstücken von ca. 5 mm Kantenlänge mit einer geometrischen Gesamtoberfläche von ca. 500 cm² eingesetzt und mit der Katalysatorschicht in elektrisch leitenden Kontakt gebracht, so konnte in 50 Minuten eine Abreicherung von 1850 mg Cu pro Liter bis auf 48 mg Cu pro Liter erreicht werden.

**Ausführungsbeispiel 6**

Ein mit Metalldrahtnetz bespannter Kunststoffrahmen wie im Ausführungsbeispiel 5 wurde in eine Suspension aus 73 ml Kupfersulfat-Lösung und 8 g Graphitpulver getaucht. Die Lösung wies eine Anfangskonzentration von 1850 mg Cu pro Liter auf. Bei Begasung mit Wasserstoff wurde die Suspension innerhalb von 50 Minuten bis auf 270 mg Cu pro Liter Lösung abgereichert.

Bei Verwendung von Suspensionen mit leitfähigen Teilchen lassen sich auch auf graphitische oder keramische poröse Trägerkörper aufgebrachte Katalysatorschichten ohne Schutzabdeckung einsetzen, wie sie aus DE-A-3 023 703 bekannt sind. Eine Erhöhung der Umsatzgeschwindigkeit wird in gleicher Größenordnung auch in diesem Falle erreicht.

**Ausführungsbeispiel 7**

Ein Kunststoffrahmen mit Metallnetzen, die mit einer Katalysatorschicht der im Ausführungsbeispiel 1 beschriebenen Art beschichtet waren und eine wirksame Außenfläche von 95 cm² aufwiesen, wurde in 475 ml einer Natriumhydrogen-Sulfitlösung eingetaucht, der durch die Katalysatorschicht hindurch Luft zugeführt wurde. Der pH-Wert der Lösung war mit KOH auf 12 eingestellt. Bei Zufuhr von Luft konnte der Gehalt an $SO_3^{--}$-Anionen von anfangs 3000 mg pro Liter in 15 Minuten auf 840 mg pro Liter gesenkt werden. Bei einem zweiten Versuch wurden in die Lösung zusätzlich Edelstahldrähte mit einer von der Lösung umspülbaren Oberfläche von ca. 500 cm² eingesetzt und mit den die Katalysatorschicht tragenden Edelstahlnetzen in elektrisch leitenden Kontakt gebracht. Bei Begasung der Lösung mit Luft durch die Katalysatorschicht hindurch wurde die Lösung von einer Anfangskonzentration von 3000 mg $SO_3^{--}$ pro Liter innerhalb von 15 Minuten jetzt bis auf 2 mg $SO_3^{--}$ pro Liter abgereichert.

**Patentansprüche**

1. Verfahren zur Reduktion oder Oxidation von reduzierbaren oder oxidierbaren Stoffen in einer wässrigen Lösung mit gasförmigen Reduktions- oder Oxidationsmitteln, die der Lösung durch eine einen elektrochemisch wirksamen Katalysator enthaltende feinporige Katalysatorschicht zugeführt werden, *dadurch gekennzeichnet*, daß die Katalysatorschicht auf ihrer der Lösung zugewandten Seite mit zumindest im Bereich der Katalysatorschicht in der Lösung verteilten Körpern aus elektrisch leitendem Material in elektrisch leitenden Kontakt gebracht wird.

2. Verfahren nach Anspruch 1, *dadurch gekennzeichnet*, daß die in der Lösung verteilten Körper über eine elektrisch leitende Schutzabdeckung für die Katalysatorschicht mit der Katalysatorschicht in Kontakt stehen.

3. Verfahren nach Anspruch 1 oder 2, *dadurch gekennzeichnet*, daß bei Abscheidung von Metall aus der Lösung Körper verwendet werden, die aus dem abzuscheidenden Metall bestehen.

4. Verfahren nach Anspruch 1 oder 2, *dadurch gekennzeichnet*, daß bei Abscheidung von Metall aus der Lösung Körper aus Edelstahldraht eingesetzt werden.

# EP 0 096 759 B1

5. Verfahren nach Anspruch 1 oder 2, *dadurch gekennzeichnet*, daß als Körper aus elektrisch leitendem Material Teilchen aus Graphit oder hinreichend leitfähiger Kohle verwendet werden.

6. Verfahren nach Anspruch 1 oder 2, *dadurch gekennzeichnet*, daß als Körper aus elektrisch leitendem Material in der zu behandelnden Lösung suspendierte Teilchen aus Metall, Graphit oder elektrisch leitfähiger Aktivkohle verwendet werden, wobei die einzelnen Teilchen nur zeitweilig mit der Katalysatorschicht oder mit der Schutzabdeckung in elektrisch leitendem Kontakt stehen.

## Claims

1. Process for reducing or oxidizing reducible or oxidizable substances in an aqueous solution with gaseous reducing or oxidizing agents which are supplied to the solution by a finely porous catalyst layer containing an electrochemically active catalyst, *characterized in that* the catalyst layer is brought into electrically conducting contact on its side facing the solution with bodies of electrically conducting material dispersed in the solution at least in the region of the catalyst layer.

2. Process according to Claim 1, *characterized in that* the bodies dispersed in the solution are in contact with the catalyst layer via an electrically conducting protective barrier for the catalyst layer.

3. Process according to Claim 1 or 2, *characterized in that*, in the deposition of metal from the solution, bodies are used which are composed of the metal to be deposited.

4. Process according to Claim 1 or 2, *characterized in that*, in the deposition of metal from the solution, bodies of stainless-steel wire are used.

5. Process according to Claim 1 or 2, *characterized in that* particles of graphite or sufficiently conductive carbon are used as bodies of electrically conducting material.

6. Process according to Claim 1 or 2, *characterized in that* particles of metal, graphite or electrically conductive activated carbon are used as bodies of electrically conducting material in the solution to be treated, the individual particles only being temporarily in electrically conducting contact with the catalyst layer or with the protective barrier.

## Revendications

1. Procédé de réduction ou d'oxydation de substances réductibles ou oxydables en solution aqueuse, par des agents gazeux réducteurs ou oxydants qui sont amenés à la solution à travers une couche de catalyseur à pores fins et contenant un catalyseur efficace du point de vue électrochimique, *caractérisé en ce* qu'il consiste à mettre le côté de la couche de catalyseur tourné vers la solution en contact électriquement conducteur avec des corps en matériau conducteur de l'électricité, répartis dans la solution au moins dans la région de la couche de catalyseur.

2. Procédé suivant la revendication 1, *caractérisé en ce* qu'il consiste à mettre les corps répartis dans la solution en contact avec la couche de catalyseur par l'intermédiaire d'un écran conducteur de l'électricité de protection de la couche du catalyseur.

3. Procédé suivant la revendication 1 ou 2, *caractérisé en ce* qu'il consiste, dans le cas de dépôt de métal dans la solution, à utiliser des corps qui sont en un métal à déposer.

4. Procédé suivant la revendication 1 ou 2, *caractérisé en ce* qu'il consiste, dans le cas de dépôt de métal dans la solution, à utiliser des corps en fil d'acier fin.

5. Procédé suivant la revendication 1 ou 2, *caractérisé en ce* qu'il consiste à utiliser comme corps en matériau conducteur de l'électricité des particules de graphite ou de charbon suffisamment conducteur.

6. Procédé suivant la revendication 1 ou 2, *caractérisé en ce* qu'il consiste à utiliser, comme corps en matériau conducteur de l'électricité dans la solution à traiter, des particules en suspension de métal, de graphite, ou de charbon actif conducteur de l'électricité, les particules individuelles n'étant en contact électriquement conducteur que temporairement avec la couche de catalyseur ou avec l'écran de protection.